(19) Europäisches Patentamt
European Patent Office
Office européen des brevets

(11) Publication number : **0 599 733 A1**

(12) **EUROPEAN PATENT APPLICATION**

(21) Application number : **93402851.5**

(22) Date of filing : **24.11.93**

(51) Int. Cl.$^5$ : **C08F 2/44**, C08F 220/18, C04B 26/06

(30) Priority : **25.11.92 US 981511**

(43) Date of publication of application : **01.06.94 Bulletin 94/22**

(84) Designated Contracting States : **DE FR GB IT**

(71) Applicant : **MINNESOTA MINING AND MANUFACTURING COMPANY**
**3M Center,**
**P.O. Box 33427**
**St. Paul, Minnesota 55133-3427 (US)**

(72) Inventor : **Frost, George W., c/o Minnesota Mining & Man. Co.**
**2501 Hudson Road,**
**P.O. Box 33427**
**St. Paul, Minnesota 55133-3427 (US)**

(74) Representative : **Warcoin, Jacques et al**
**Cabinet Régimbeau**
**26, avenue Kléber**
**F-75116 Paris (FR)**

(54) **Polymer concrete.**

(57) Polymer concrete compositions comprising (i) granular aggregate ; (ii) dicyclopentenyl acrylate or dicyclopentenyl methacrylate ; (iii) a $C_5$ to $C_{30}$ alkyl ester of acrylic or methacrylic acid ; and (iv) a free-radical initiator.

EP 0 599 733 A1

## Field of the Invention

This invention relates to polymer concrete compositions.

## Background of the Invention

Polymer concrete compositions comprising dicyclopentenyl acrylate or methacrylate and an alkyl acrylate or methacrylate are described in U.S. Patent No. 4,197,225. Impregnating compositions comprising dicyclopentenyl acrylate or methacrylate and an alkyl acrylate or methacrylate are described in U.S. Patent No. 4,910,080.

## Summary of the Invention

The present invention provides novel polymer concrete compositions comprising:

(a) a filler having a void volume of less than about 25%;

(b) a monomer selected from the group consisting of dicyclopentenyl acrylate, dicyclopentenyl methacrylate and a mixture thereof;

(c) a monomer selected from the group consisting of a $C_5$ to $C_{30}$ alkyl ester of acrylic acid, a $C_5$ to $C_{30}$ alkyl ester of methacrylic acid, and a mixture of two or more of the esters; and

(d) a free-radical initiator for polymerizing components (b) and (c);

wherein component (b) is present in an amount of about 20 to about 62.5 parts by weight per 100 parts by weight of the total amount of monomer component (b) and monomer component (c), and component (c) is present in an amount of about 37.5 to about 80 parts by weight per 100 parts by weight of the total amount of component (b) and component (c).

The compositions of the invention are useful in the repair/restoration of roads and parking ramps as well as in the fabrication of railroad ties, telephone poles, curbs, etc.

## Detailed Description

The filler employed in the compositions of the present invention are well known to those skilled in the art and include conventional materials ranging from powders to granular aggregate. Examples of suitable fillers are pebbles, sand or other large and small aggregates used in preparing concrete. Other generally high modulus inorganic silicaneous materials may be employed. Still further, examples of suitable fillers are glass bubbles or beads, colorquartz, carbon black, pigments and fumed silica. Preferably the filler will have a void volume of less than about 15%. Further, preferably the filler comprises a mixture of large, small and fine filler to provide higher compressive strengths than ordinarily obtained if only a filler of one size is employed.

Typically, the filler will be present in an amount of about 300 to 2000 parts by weight, and preferably will be present in an amount of about 550 to 900 parts by weight per 100 parts by weight of the total amount of monomer components (b) and (c).

Dicyclopentenyl acrylate and dicyclopentenyl methacrylate which are used as monomer component (b) are commonly referred to by the abbreviations DCPA and DCPMA, respectively, or generically as DCP(M)A. These monomers have the structural formula:

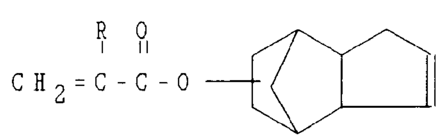

wherein R is -H or $-CH_3$. The methacryloxy substituent may be on either the 5 or 6 position. These compounds may also be called 3a, 4, 5, 6, 7, 7a-hexahydro-4, 7-methanoindenyl acrylate-5 (or 6) or methacrylate-5 (or 6).

Examples of suitable acrylic acid or methacrylic acid esters for use as component (c) of the composition include the esters of acrylic acid or methacrylic acid with $C_5$ to $C_{30}$ alcohols. Preferred esters are esters of acrylic acid or methacrylic acid with $C_6$ to $C_{18}$ alcohols. Specific examples of preferred esters are iso-octyl acrylate, 2-ethyl hexyl acrylate, lauryl methacrylate and stearyl methacrylate.

Monomer components (b) and (c) will preferably be present in amounts of about 55 to 45 and about 45 to 55 parts by weight, respectively, both based on 100 parts by weight of the total amount of monomer components (b) and (c).

The free radical initiator that may be used in the composition of this invention is any polymerization agent that will furnish free radicals under polymerization conditions. The initiator is used in an amount effective to produce substantially complete polymerization of monomer components (b) and (c) at ambient temperature within less than about 24 hours. Preferably, the free radical initiator is present in an amount that is about 0.05 to 5 parts by weight per 100 parts by weight of the total amount of monomer components (b) and (c). Particularly preferred catalysts are organic peroxy compounds such as benzoyl peroxide and cumene hydroperoxide. The free radical initiator may be a photoinitiator, which is an agent that is sensitive to ultraviolet light as would be provided in sunlight or in UV lamps. Examples of such a photoinitiator are acetophenones, such as 2,2-dimethoxy-2-phenylacetophenone (commercially available as Irgacure 651 from Ciba-Geigy Corp., Hawthorne, NY) and diethoxyacetophenone; benzil; and benzoin ethers.

The composition of the invention may contain mixtures of two or more different free radical initiators. For example, both an organic peroxy compound and a photoinitiator may be utilized to provide a rapid cure with particularly rapid cure of the outermost layer of the coating from exposure to light.

A metal drier or siccative is preferably incorporated in the composition in an amount effective to enhance speed and completeness of cure of the composition. Thus, when only a photoinitiated free radical initiator is utilized, the incorporation of a metal drier is particularly desirable to assure complete cure of the composition throughout the permeated concrete. When the free radical initiator is an organic peroxide, the additional use of a metal drier is desirable to provide a more rapid cure of the polymer than would be possible in the absence of the metal drier. Typically, the metal drier is present in the composition in amounts such that metal is present in about 0.0005 to 2 parts by weight per 100 parts by weight of the total amount of monomer components (b) and (c).

Metal driers include polyvalent metal salts of inorganic acids or aliphatic acids and oxides of the metals. Examples of such salts include the chloride, nitrate, borate, sulfate, acetate, acetyl acetonate, propionate, butyrate, pentanoate, octoate, hexoate and naphthenate. Additionally, the metal drier may be the salt of such complex acids as resinic acid, tall oil fatty acids, linseed oil fatty acids, lauric acids, palmitic acid, myristic acid, stearic acid, oleic acid, linoleic acid, linolenic acid, behenic acid, cerotic acid, montanic acid and abietic acid. Examples of the polyvalent metal include calcium, copper II, zinc II, manganese II, manganese III, lead II, cobalt II, cobalt III, iron III, vanadium II, vanadium III and zirconium IV.

When the composition of the invention is stored in the presence of a metal drier, the compositions may also contain a volatile reaction inhibitor to prevent premature polymerization of monomer components (b) and (c) before application to the desired substrate. Because these inhibitors are volatile, they dissipate in the air upon application of the composition to the substrate and no longer inhibit the polymerization reaction. Preferred inhibitors include volatile oximes such as methylethyl ketone-oxime, methylbutyl ketone-oxime, 5-methyl-3-heptanone-oxime, cyclohexanone-oxime and butyraidehyde-oxime. Volatile reaction inhibitors are present in an effective amount, preferably in amounts of about 0.1 to 2 parts by weight per 100 parts by weight of the total amount of monomer components (b) and (c).

Amine accelerators may also be incorporated in the composition just before application to reduce cure time, especially when the composition is to be used in cold weather conditions. Examples of amine accelerators are aniline; N,N-dimethylaniline; N,N-diethylaniline; toluidine; N,N-dimethyl-p-toluidine; N-ethyl,N-hydroxyethyl-m-toluidine; 2,2'-(m-tolylimino)diethanol; N,N-di(hydroxyethyl)toluidine and the like. These amine accelerators are present in an amount of about 0.01 to 2 parts by weight per 100 parts by weight of the total amount of monomer components (b) and (c).

The composition of the present invention may additionally comprise minor amounts of additives, such as coloring agents, stabilizers, thickeners, rheological modifiers, preservatives or anticorrosive agents.

The composition may also comprise small amounts of silane-type coupling agents to enhance the bond between the polymer and the granular aggregate. Also crosslinkers may be added to modify physical and chemical properties of the composition.

The composition of the present invention is typically provided as a four-part mixture comprising both components (b) and (c) in the indicated ratios in one container, the metal drier, if employed, in a second container, the free radical initiator in the third container, and the filler in a fourth container. The free radical initiator should never be combined with the metal drier without monomer components (b) and (c) present due to the violent reaction that would ensue. Alternatively, this composition may be provided as a three-part system. In such a system, the monomer components (b) and (c) are provided in one container, optionally together with a metal drier and a stabilizer. The free radical reaction initiator is provided in a second container and is mixed together with monomer components (b) and (c) at the site of application together with the filler.

The composition of the present invention is optimally mixed at the site of application.

In the following examples, all compositions are reported in parts by weight.

EXAMPLES 1 - 15

Binder systems for the polymer concrete compositions of the present invention were screened by evaluating tensile properties of the polymerized, unfilled monomer blend compositions indicated in Table 1. The polymerized compositions were prepared by blending the monomers in the indicated ratios, adding 4 parts of an 83% active cumene hydroperoxide (CHP, available from Atochem North America, Inc., Buffalo, NY), 1 part of a cobalt salt containing 12% metal (Chem-All, available from Mooney Chemicals, Inc., Cleveland, OH), and curing the resulting mixture at about 22°C (72°F) for 24 hours. Viscosities of uncured polymer blends were determined using a Brookfield™ RV viscometer equipped with an ultra-low adaptor, operating at 100 rpm and at temperatures of 4°C (40°F) and 22°C (72°F). The cured samples were stored under ambient conditions for approximately 10 days before tensile testing. Tensile properties or strengths were determined using test methods described in ASTM D638 at a strain rate of 0.13 cm/min (0.05 inch/min). Tensile data is reported as an average of the number of samples indicated in the Table.

METRIC TABLES

**TABLE 1**

Binder System Evaluations

| Example | 1 | 2 | 3 | 4 | 5 | 6 | 7 | 8 |
|---|---|---|---|---|---|---|---|---|
| DCPMA[1] | 100 | 80 | 70 | 65 | 60 | 50 | 40 | 30 |
| IOA[2] | - | 20 | 30 | 35 | 40 | 50 | 60 | 70 |
| 2-EHA[3] | - | - | - | - | - | - | - | - |
| LMA[4] | - | - | - | - | - | - | - | - |
| SMA[5] | - | - | - | - | - | - | - | - |
| 4°C Viscosity (cps) | 54.9 | - | - | 10.4 | - | 7.9 | - | - |
| 22°C Viscosity (cps) | 33.4 | - | - | 7.9 | - | 7.5 | - | - |
| Break Stress (kilo pascal) | 4,917 | 6,055 | 4,489 | 3,110 | 3,048 | 1,772 | 310 | 119 |
| Break Strain (%) | 0.9 | 1.9 | 1.0 | 0.9 | 1.3 | 79 | 86 | 55.7 |
| Break Energy (Joules/cu cm.) | 0.020 | 0.025 | 0.018 | 0.046 | 0.008 | 0.481 | 0.053 | 0.011 |
| Modulus (kilo pascal) | 766,600 | 469,720 | 637,780 | 457,560 | 37,120 | 21,210 | 5,320 | 1,380 |
| No. of Specimens Tested | 10 | 54 | 6 | 6 | 9 | 23 | 3 | 3 |

**TABLE 1 (cont.)**
Binder System Evaluations

| Example | 9 | 10 | 11 | 12 | 13 | 14 | 15 |
|---|---|---|---|---|---|---|---|
| DCPMA[1] | 80 | 65 | 60 | 50 | 56 | 60 | 50 |
| IOA[2] | - | - | - | - | - | - | - |
| 2-EHA[3] | 20 | 35 | 40 | 50 | - | - | - |
| LMA[4] | - | - | - | - | 44 | - | - |
| SMA[5] | - | - | - | - | - | 40 | 50 |
| | | | | | | | |
| 4°C Viscosity (cps) | - | 10.3 | - | - | 15 | - | Paste |
| 22°C Viscosity (cps) | - | 7.6 | - | - | 10.3 | - | 14.8 |
| | | | | | | | |
| Break Stress (kilo pascal) | 7,151 | 1,896 | 3,441 | 1,145 | 1,379 | 1,457 | 352 |
| Break Strain (%) | 3.4 | 0.8 | 2.0 | 122 | 0.9 | 0.6 | 48.5 |
| Break Energy (Joules per cu. cm) | 0.027 | 0.006 | 0.009 | 0.210 | 0.025 | 0.004 | 2.050 |
| Modulus (kilo pascal) | 257,390 | 328,360 | 204,180 | 11,510 | 202,580 | 307,960 | 9,050 |
| No. of Specimens Tested | 9 | 3 | 5 | 2 | 5 | 7 | 3 |

[1] Dicyclopentenyl methacrylate, available from Rhone-Poulenc, Cranbury, NJ.

[2] Iso-octyl acrylate

[3] 2-Ethyl hexyl acrylate, available from Union Carbide, Danbury, CT.

[4] Lauryl methacrylate, available from Rohm & Haas, Philadelphia, PA.

[5] Stearyl methacrylate, available from Rhom and Haas, Philadelphia, PA)

The binder systems of Examples 5-8 and 11-15 (when combined with granular aggregate) are considered as being within the scope of the present invention. The data presented in Table 1 indicates a particularly desirable yield point of high magnitude in the compositions of Examples 6 and 15 with a corresponding increase in break strain and break energy for those same compositions. These compositions are more ductile or elastic and display significantly more toughness and flexibility than compositions having lower IOA or SMA contents. The toughness and flexibility of these compositions gives them improved impact resistance and stress relaxation properties relative to other IOA and SMA compositions which affords better initial adhesion between old concrete and a new patch as well as providing a longer service life because the polymer concrete patch is better able to compensate for forces induced by temperature extremes such as freeze thaw cycles. Taken independently, this tensile data suggests that compositions based on blends of DCPMA with either IOA or SMA would produce binder systems offering similar physical properties and offer comparable utility as binders for polymer concrete formulations. However, when the tensile data is considered in conjunction with the viscosity of the binder at lower temperatures (i.e., 4°C), the IOA compositions emerge as the preferred compositions for the polymer concrete binder formulations of the present invention as their viscosities are significantly lower than the viscosities of the SMA compositions. Lower viscosities for the binder compositions are important as the binder is more readily able to penetrate into a porous substrate such as old or cracked concrete, and to thereby produce better adhesion of the patch to the concrete while simultaneously providing superior barrier properties to seal and protect the concrete from environmental challenges. The data in Table 1 also demonstrates very comparable performance between DCPMA/IOA compositions and DCPMA/2-EHA compositions, suggesting a general preference for (meth)acrylate monomers in the $C_8$ molecular weight range. Additionally, the toughness and flexibility properties are realized without adversely impacting the tensile modulus and stress properties of filled polymer concrete formulations to the point that they do not have sufficient compressive strength to function adequately as a concrete repair material (cf., Examples 21-23).

Preferred binder systems for use in the compositions of the present invention will exhibit a viscosity at 22°C of from about 5 to 50 cps, most preferably from about 5 to 20 cps.

Further, preferred binder systems for use in the compositions of the present invention will exhibit a modulus of less than about 300,000 kilopascal, more preferably less than about 20,000 kilopascal.

## EXAMPLE 16

A binder composition according to the teachings of this invention was prepared which was identical to the binder of Example 6 except that cumene hydroperoxide/cobalt salt drier catalyst system was replaced by a benzoyl peroxide/ amine accelerator catalyst system. More specifically, 4 parts of 50% active benzoyl peroxide (available from Atochem, Buffalo, NY) and 0.25 parts of N-ethyl-N-hydroxyethyl-m-toluidine (available from Emery, Castanea, PA) were added to a blend of 50 parts DCPMA, 50 parts IOA and 1 part of a 12% cobalt salt. The resulting mixture was allowed to cure under ambient conditions alongside a sample of the binder of Example 6, with both samples being monitored for their gel time and surface tack free time. The cumene hydroperoxide catalyzed mixture had a gel time of 6 hours and a surface tack free time of <18 hours while the benzoyl peroxide catalyzed mixture had a gel time of 3 hours and a surface tack free time of <24 hours.

## EXAMPLES 17 - 20

Polymer concrete formulations (i.e., filled binder systems) of the present invention were prepared by incorporating various fillers into the binder composition of Example 6 and the tensile properties of these samples evaluated according to ASTM D638 as previously described. The various formulations are detailed in Table 2

along with the tensile test data for the samples. With Examples 17- 19, the test specimens were prepared by adding the filler in the indicated amount to 100 parts of the binder, mixing until a homogeneous mixture was obtained, and placing the mixture into a mold for curing. In Example 20, the test specimens were formed by filling the mold with a dry silica sand filler (approximately 12 grams, Unimum Natural Grain sand, available from Unimin Corp., LeSueur MN), saturating the filler with binder by pouring approximately 2.7 grams of the indicated binder over the filler, and curing the samples at 22°C (72°F) for approximately 10 days before testing.

**TABLE 2**

| Polymer Concrete Formulation Tensile Properties | | | | | |
|---|---|---|---|---|---|
| Example | Control | 17 | 18 | 19 | 20 |
| Binder (parts) | 100 | 100 | 100 | 100 | 100 |
| White Portland Cement (phr) | - | 300 | - | - | - |
| Grey Portland Cement (phr) | - | - | 300 | - | - |
| Mortar Mix (phr) | - | - | - | 600 | - |
| Silica Sand (phr) | - | - | - | - | 450 |
| Break Stress (kilopascal) | 938 | 4,806 | 5,241 | 7,234 | 3,696 |
| Beak Strain (%) | 36 | 6.9 | 6.8 | 4.1 | 6.9 |
| Modulus (kilopascal) | 19,800 | 92,300 | 106,000 | 194,000 | 71,100 |

The data from Examples 17 - 20 demonstrates that by incorporating high modulus aggregate filler into the low modulus and low tensile binders of the present invention, polymer concrete compositions can be prepared having strengths equal to or greater than standard grade 4000 psi compressive strength Portland cement concrete which typically has a tensile stress of 2760kps (400 psi), and a tensile strain of 0.05%.

EXAMPLES 21 - 23 and C1 - C2

The binder composition of Example 6 was added to the aggregate fillers shown in Table 3 at the indicated binder levels (by weight) which were required to achieve fully saturated "wet" mortar/concrete samples. Tensile measurements were obtained according to the procedures described in ASTM C190, compression data was obtained according to the procedures described in ASTM C109, and flexural modulus data was obtained according to the procedures described in ASTM C348, with the results of each test being reported as the average of three samples.

**TABLE 3**
Polymer Concrete/Mortar
Tensile Properties

| EXAMPLE | 21 | 22 | 23 | C1[4] | C2[5] |
|---|---|---|---|---|---|
| Fine Sand[1] (%) | 100 | - | 40 | Per directions | Per directions |
| Large Sand[2] (%) | - | 100 | 40 | - | - |
| Unimim 120 Flour[3] (%) | - | - | 20 | - | - |
| Binder (%) | 10 | 20 | 15 | - | - |
| Tensile (kilopascal) | 3834 | 4869 | 8041 | 8434 | 2552 |
| Compression (kilopascal) | 13,300 | 16,710 | 27,140 | 33,720 | 31,100 |
| Flexural Modulus (kilopascal) | 19,300 | 20,300 | 35,100 | 45,300 | 10,300 |

1 Unimum Natural Grain sand, available from Unimin Corp., LeSueur MN.

2 45-55 Red Flint Sands, available from American Materials, Eau Claire WI.

3 Unimum 120 Silica Flour, available from Unimin Corp., LeSueur MN.

4 Sika Pronto 12 Polymer Concrete, available from Sika Corp., Lyndhurst, NJ.

5 Sika Set Latex Modified Portland Cement Concrete, available from Sika Corp., Lyndhurst, NJ.

The data from Examples 21 - C2 demonstrate that a wide range of fillers can readily be incorporated into the binder compositions according to the teachings of the present invention and that a range of strength properties is attainable by altering the mix ratio of the aggregate. Additionally, the tensile and flexural strengths of these compositions are superior to those achieved with the commercially available latex modified Portland Cement concrete cement of Example C2, which is widely used in the concrete restoration industry.

EXAMPLES 24 - 30

Physical properties of DCPMA/IOA binder systems can be adjusted over a wide range simply by varying the ratio of the monomers of the binder. Physical properties of the binder compositions can also be adjusted by incorporating a multifunctional cross-linking monomer into the binder formulation. The effect of incorporating such a cross-linking agent into the binder formulation is dramatically evidenced in compositions having high (i.e., >60 phr) IOA contents (cf., Example 8). These formulations, in the absence of a cross-linking monomer, typically produce binders having very poor physical properties due to the soft, "cheesy" character of the cured polymer. By incorporating the appropriate level of a multifunctional cross-linking monomer into the binder composition, cured binder systems having very acceptable physical properties can be prepared.

A series of DCPMA/IOA binder compositions according to the teachings of the present invention were prepared with IOA contents ranging from approximately 38% to 71% by weight, relative to the DCPMA and IOA content of the polymer, and having a range of cross-linking monomer content, the compositions of which are

detailed in Table 4. Two additional samples were prepared which utilized alternative cross-linking monomers. All of the compositions detailed in Table 4 also include a catalyst system comprising 4 parts of an 83% active CHP and 1 part of a 12% metal content cobalt salt drier. The samples were cured for approximately 10 days at 22°C (72°F) prior to conducting tensile measurements according to test methods described in ASTM D638, as previously described.

**TABLE 4**
Crosslinked Binder Systems
Tensiles Properties

| Example | Control | 24 | 25 | 26 | 27 | 28 | 29 | 30 |
|---|---|---|---|---|---|---|---|---|
| DCPMA | 100 | 100 | 100 | 100 | 100 | 100 | 100 | 100 |
| IOA (IOA %) | 100 (50) | 60 (37.5) | 90 (47.4) | 86 (46.2) | 156 (61) | 250 (71.4) | 100 (50) | 100 (50) |
| TEGDMA[1] | - | 40 | 5 | 100 | 56 | 150 | - | - |
| Santolink X1-100[2] | - | - | - | - | - | - | 40 | - |
| VTBNX[3] | - | - | - | - | - | - | - | 40 |
| Break Stress (kilo pascal) | 1,531 | 15,000 | 2,765 | 24,780 | 41,720 | 4,620 | 703 | 1,000 |
| Break Strain (%) | 48 | 5.6 | 9.2 | 15.7 | 33 | 31 | 20 | 63 |
| Energy/ Volume (Joule per cubic cm) | 0.25 | 0.19 | 0.058 | 1.0 | 0.38 | 0.39 | 0.042 | 0.21 |
| Modulus (kilo pascal) | 24,500 | 405,000 | 45,800 | 235,000 | 25,900 | 28,300 | 14,500 | 12,600 |

The data for Examples 24 - 30 demonstrate the impact of the three cross-linking monomers on the physical properties of polymer concrete cement compositions. The effect is most evident with Example 28, which, based on its high IOA content, would normally exhibit poor physical properties (cf., Example 8), but, as a result of the incorporation of a cross-linking monomer, has physical properties quite similar to those of the control having a significantly lower IOA content.

## Claims

1. A composition comprising:
   (a) a filler having a void volume of less than about 25%;
   (b) a monomer selected from the group consisting of dicyclopentenyl acrylate and, dicyclopentenyl methacrylate and a mixture thereof;
   (c) a monomer selected from the group consisting of a $C_5$ to $C_{30}$ alkyl ester of acrylic acid, a $C_5$ to $C_{30}$ alkyl ester of methacrylic acid, and a mixture of two or more of the esters; and
   (d) a free-radical initiator for polymerizing monomer components (b) and (c);
   wherein component (b) is present in an amount of about 20 to about 62.5 parts by weight per 100 parts by weight of the total amount of monomer component (b) and monomer component (c), and monomer component (c) is present in an amount of about 37.5 to about 80 parts by weight per 100 parts by weight of the total amount of monomer component (b) and monomer component (c).

2. A composition according to Claim 1, further comprising a siccative or drier.

3. A composition according to Claim 1, wherein monomer (c) is selected from the group consisting of a $C_6$ to $C_{18}$ alkyl ester of acrylic acid, a $C_6$ to $C_{18}$ alkyl ester of methacrylic acid, and a mixture of two or more of the foregoing.

4. A composition according to Claim 1, wherein monomer component (c) is selected from the group consisting of isooctyl acrylate and 2-ethylhexyl acrylate.

5. A composition according to Claim 1, wherein monomer component (b) is present in an amount of about 55 to 40 parts by weight and monomer component (c) is present in an amount of about 45 to 60 parts by weight, both per 100 parts by weight of the total amount of monomer components (b) and (c).

6. A composition according to Claim 1, wherein said filler is a granular aggregate.

7. A composition according to Claim 1, further comprising a crosslinker polymerizable with monomer components (b) and (c).

8. A method of preparing or repairing a surface comprising applying a composition according to Claim 1 to a substrate and allowing said composition to harden through polymerization of said monomer components (b) and (c).

9. A method according to Claim 8, wherein said surface is concrete requiring repair and said composition is applied to the sites requiring repair.

10. A hardened article fabricated from a composition according to Claim 1.

European Patent Office

# EUROPEAN SEARCH REPORT

Application Number
EP 93 40 2851

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,A | US-A-4 197 225 (W.D.EMMONS)<br>--- | | C08F2/44<br>C08F220/18<br>C04B26/06 |
| A | EP-A-0 047 120 (ROHM AND HAAS CO.)<br>--- | | |
| A | US-A-4 910 080 (G.W.FROST)<br>----- | | |
| | | | TECHNICAL FIELDS SEARCHED (Int.Cl.5) |
| | | | C08F<br>C04B |

The present search report has been drawn up for all claims

| Place of search | Date of completion of the search | Examiner |
|---|---|---|
| THE HAGUE | 8 March 1994 | Cauwenberg, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)